(19) Europäisches Patentamt
European Patent Office
Office européen des brevets

(11) Publication number: **0 186 227 B1**

# (12) EUROPEAN PATENT SPECIFICATION

(45) Date of publication of patent specification: **21.06.89**

(51) Int. Cl.$^4$: **G 11 B 7/24**

(21) Application number: **85201918.1**

(22) Date of filing: **21.11.85**

## (54) Optical recording element and method of recording information.

(30) Priority: **17.12.84 NL 8403817**

(43) Date of publication of application:
**02.07.86 Bulletin 86/27**

(45) Publication of the grant of the patent:
**21.06.89 Bulletin 89/25**

(84) Designated Contracting States:
**CH DE FR GB IT LI NL**

(56) References cited:
**EP-A-0 050 047**
**EP-A-0 050 388**
**EP-A-0 083 951**

**OPTICAL STORAGE MEDIA - PROCEEDINGS OF SPIE, vol. 420, 6th-10th June 1983, pages 162-167, Arlington, Virginia, US; P.M. HEYMAN: "High performance erasable optical disc"**

(73) Proprietor: **N.V. Philips' Gloeilampenfabrieken**
**Groenewoudseweg 1**
**NL-5621 BA Eindhoven (NL)**

(72) Inventor: **Rippens, Wilhelmus Gertrudes V. M.**
**c/o INT. OCTROOIBUREAU B.V. Prof. Holstlaan 6**
**NL-5656 AA Eindhoven (NL)**
Inventor: **van der Poel, Carolus Johannes**
**c/o INT. OCTROOIBUREAU B.V. Prof. Holstlaan 6**
**NL-5656 AA Eindhoven (NL)**

(74) Representative: **Weening, Cornelis et al**
**INTERNATIONAAL OCTROOIBUREAU B.V. Prof. Holstlaan 6**
**NL-5656 AA Eindhoven (NL)**

(56) References cited:
**OPTICAL STORAGE MEDIA - PROCEEDINGS OF SPIE, vol. 420, 6th-10th June 1983, pages 200-204, Arlington, Virginia, US; D. STRAND: "Optimization of reversible optical data storage disks"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 186 227 B1

**Description**

The invention relates to an erasable optical recording element having a supporting plate and which comprises a recording layer having a tellurium alloy, in which the recording layer is converted by exposure to modulated laser light in the exposed places from a more ordered or crystalline state into a less ordered or amorphous state and in which the locally changed state can be read by means of laser light.

Such a recording element is known, for example, from U.S. Patent Specification 3,530,441. According to this Patent Specification the element and the recording method performed therewith are mainly used for recording images which can be printed visibly. For this purpose the condition is used that the amorphous parts of the recording layer have a stable high electrical (ohmic) resistance and the crystalline parts have a low electrical resistance. After depositing electrical charge upon the recording film, the crystalline or more ordered parts of the film, which represent, for example, the stored information, are not charged and the amorphous parts which have a high resistance are charged. The charge pattern thus obtained can be made visible by causing electrically charged ink particles or pigment particles to adhere to the electrically charged amorphous parts of the recording film. The resulting toner image can be printed, for example, on a sheet of paper.

It is stated in column 3, lines 4—8 and 26—30, of the above mentioned U.S. Patent Specification that the stored information can be read in various manners, for example, by determining the electrical resistance, capacity, dielectric constant, refractive index, reflection, light absorption and light transmission. For example, an electron beam may be used which is reflected in accordance with the condition of the various parts of the recording film.

These other possibilities are not described in the said U.S. Patent Specification other than in connection with the method shown in Figs. 13—15 in which a recording element is used electrically as a means for light modulation. For this purpose, the element is provided on each side with an electrode to which a voltage pulse can be applied.

The EP—A—0.083.951 describes an optical recording element for ablative optical recording having a layer comprising an Te-Se-Sb alloy and having a thickness of 3—60 nm. As pointed out on page 25 of this document a large layer thickness (f.i. 100 nm) leads to deterioration.

It is an object of the present invention to provide an erasable optical recording element in which data are recorded in the form of amorphous spots in a polycrystalline matrix by means of pulsated laser light.

A further object is to provide a recording element the recording layer of which has a high sensitivity to laser light, which permits of a high information density and which offers the possibility of a high recording rate. By way of example, it is desired to record an amorphous spot of the order of 1 µm diameter in, for example, 50 ns. The recording energy then is 0.3—0.8 nJ per recorded amorphous spot.

Another object is to read the stored information in the form of amorphous spots in a crystalline matrix by means of continuous weak laser light, in particular in reflection, in which a good signal-to-noise ratio is obtained.

According to still another object, the recording layer of the recording element together with the information stored therein must be stable and tenable for a long period of time. Moreover, it must be possible to erase the stored information by a simple thermal treatment, the amorphous parts assuming the original crystalline structure. Moreover, it must be possible to record and erase information frequently without permanent deformation or other damage to the recording layer.

According to a further object, in a preferred form of the recording element the possibility must be presented to locally erase the amorphous spot by exposure to laser light. Said erasing must furthermore take place preferably in real time. This means that with the same rate of movement of the recording element it must be possible both to write and to erase by using laser light.

The Applicants have come to the conclusion that in the realization of these objects the composition of the recording layer is a very important factor. The following problems, which as such constitute an essential element in producing the present invention, play an important role.

First of all, the crystallization temperature of the recording material is of importance. At a comparatively high crystallization temperature, the amorphous information areas are stable at room temperature, which is of advantage. On the other hand, the erasing process is then more difficult. The amorphous areas cannot easily be returned to the original crystalline structure.

Another aspect is that when reading in reflection the reflection differences between amorphous and crystalline areas must be as large as possible so as to obtain a good signal-to-noise ratio. The layer thickness plays an important role. The disc noise which in crystalline areas is considerably higher than in the amorphous areas is also of importance. Therefore, in the Applicants' opinion, the crystals in the layer must be as small as possible. Furthermore the thickness of the recording layer is of importance for the recording process. When the layer thickness is too small the possibility exists that upon exposure to pulsated laser light holes will be formed in the recording layer, in addition to or instead of a conversion from crystalline to amorphous. This must be avoided at all costs. When the layer thickness is too large, the recording energy is too high and hence the laser light sensitivity, expressed in threshold energy for the information of an amorphous spot, is too low.

Another important aspect is the behaviour upon erasing. When recording, the exposed crystalline area must be heated up to the melting point, must then be allowed to melt and then be cooled rapidly to fix the

amorphous area. Upon erasing, the amorphous area must be heated up to between the glass transition temperature and the melting temperature and be kept at this temperature until all the amorphous material in the area has crystallized. When the duration of heating for erasure is too short only a partial crystallization takes place as a result of which the information, all-be-it in a weakened condition, still remains. It becomes extra complicated when the requirement is imposed that it must be possible to erase in real time by means of laser light. In this connection the size of the laser light spot used upon erasing, the so-called erasing spot, plays an important role, as well as the rate of movement of the recording element. Moreover, it must be possible to switch the layer many times, for example 100—1000 times or even more, without the recording layer being deformed or working loose from the substrate. Switching is to be understood to mean recording plus erasing.

The above-mentioned objects are achieved by means of an erasable optical recording element of the type mentioned in the opening paragraph which is characterized according to the invention in that the recording layer comprises a Te-Se-Sb alloy, the ratio of the elements Te, Se and Sb in at. percent lying within a range in the Te-Se-Sb composition diagram which is bounded by a polygon having the corners

$$Te_{90}Se_8Sb_2—Te_{78}Se_{20}Tb_2—Te_{18}Se_{52}Sb_{30}—Te_{28}Se_2Sb_{70}—Te_{90}Se_2Sb_8$$

and furthermore that the layer thickness of the recording layer is between 80 and 300 nm.

In the above composition range, alloys are found from which recording layers can be manufactured in which amorphous spots can be formed by means of a pulsated laser light beam while using a low recording energy of approximately 0.3—0.8 nJ per spot. This enables the use of a laser of a very low power, for example a power of a few milliwatts on the recording layer, and an extremely short pulse time of, for example, 50 ns. The recorded information can be read in reflection, an excellent signal-to-noise ratio being obtained.

The recording layer has a good tenability. Moreover, the amorphous spots are very stable at room temperature. The amorphous spots can be erased by a thermal treatment, in particular by heating the recording material for some time at a temperature between the glass transition temperature (devitrification temperature) and the melting temperature of the recording material.

In a favourable embodiment of the recording element according to the invention the ratio of the elements Te, Se and Sb in at. percent lies within a range in the Te-Se-Sb diagram which is bounded by a polygon having the corners

$$Te_{90}Se_8Sb_2—Te_{78}Se_{20}Sb_2—Te_{39}Se_{21}Sb_{20}—Te_{63}Se_2Sb_{35}—Te_{90}Se_2Sb_8.$$

Recording elements which have particularly advantageous properties can be manufactured by means of the compositions in this preferred range. For example, the amorphous spots can be converted into the original crystalline structure by exposure to laser light in real time. The length of the laser light spot upon erasing, hereinafter termed erasing spot, is, for example, 20—100 μm. The exposure time of the amorphous spot is then, for example, 10—100 μs. In this case the lasers for erasing and recording may be coupled together so that, for example, the erasing spot precedes the recording spot in the recording layer. The width of the erasing spot is 2 μm.

Examples of preferred compositions of the recording layer in which the recording information can be erased by means of laser light in real time are $Te_{80}Se_{10}Sb_{10}$ and $Te_{74}Se_{11}Sb_{15}$. Another composition, $Te_{50}Se_{30}Sb_{20}$, has a particularly high stability.

Examples of suitable compositions are recorded in the table below.

TABLE

| Number | Composition | Recording energy (nJ) | Signal-to-noise ratio (dB/m) |
|---|---|---|---|
| 1 | $Te_{30}Se_{30}Sb_{40}$ | 1.0 | 86 |
| 2 | $Te_{33.3}Se_{33.3}Sb_{33.3}$ | 0.6 | 58 |
| 3 | $Te_{40}Se_{20}Sb_{40}$ | 1.2 | 83 |
| 4 | $Te_{40}Se_{30}Sb_{30}$ | 0.4 | 90 |
| 5 | $Te_{50}Se_{10}Sb_{40}$ | 0.8 | 86 |
| 6 | $Te_{50}Se_{30}Sb_{20}$ | 0.8 | 88 |
| 7 | $Te_{70}Se_{12}Sb_{18}$ | 0.5 | 94 |
| 8 | $Te_{74}Se_{11}Sb_{15}$ | 0.5 | 95 |
| 9 | $Te_{74}Se_{13}Sb_{13}$ | 0.5 | 94 |
| 10 | $Te_{80}Se_{10}Sb_{10}$ | 0.5 | 94 |

In a further preferred form the recording layer of the optical recording element according to the invention has a layer thickness which is approximately equal to $\lambda/2n_a$, wherein $\lambda$ is the wavelength of the irradiating laser light upon reading and $n_a$ is the refractive index in the amorphous state. The layer thickness in the materials which can be used according to the invention is then generally 80—150 nm at a $\lambda$ of approximately 800 nm.

Extra advantages can be obtained, if, according to a further preferred embodiment a coating layer is provided on the recording layer on the side remote from the substrate. Said coating layer in the first instance serves to protect the recording layer from damage and it also appears that as a result of this the number of switching times increases by a few orders of magnitude. With a suitable choice of the coating layer the contrast upon reading can also be favourably influenced. The coating layer may be, for example, of $SiO_2$.

In an embodiment which is suitable for reading by means of reflection differences, the recording layer is present on a transparent substrate. Recording and reading information then takes place on the substrate side of the element. Disturbing effects on reading created by dust particles present on the surface of the recording layer remote from the substrate are substantially avoided by said measure.

The invention also relates to a method for optically recording information and for erasing the recorded information, in which an optical recording element, which comprises a substrate which is transparent to laser light and has a crystalline recording layer of thickness of 80—300 nm provided thereon and comprising a Te-Se-Sb alloy the ratio of the elements Te, Se and Sb in at. percentage lying within a range in the Te-Se-Sb composition diagram which is bounded by a polygon having the corners

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8,$$

is rotated at a frequency of 1—30 Herz and is exposed from the substrate side to laser light pulsed in accordance with the information and having a pulse energy equal to or smaller than 1 nJ on the layer, as a result of which the crystalline recording layer melts in the exposed places and then cools, amorphous information areas being formed, and in which during erasing the amorphous areas are converted into the original crystalline structure by means of a thermal treatment. A preferred thickness of the recording layer is 80—150 nm.

A favourable embodiment of this method is characterized in that the amorphous areas are heated to a temperature between the glass transition temperature and the melting point of the recording layer by exposure to a laser light beam, are kept at this temperature for some time until the amorphous part of the recording material has crystallized, and are then cooled so that the amorphous areas are converted in real time into the original crystalline structure.

In a further favourable embodiment of the method in accordance with the invention the amorphous information areas are converted into the original crystalline structure by exposure to a laser light beam having a spot length of 1—100 µm, a spot width of 1.5—2.5 µm and an exposure time per amorphous area of 1—200 µs.

The information stored in the form of amorphous areas in the recording layer of the recording element can be read by means of laser light, for example, by using the difference in reflection between the amorphous areas and the surrounding crystalline matrix.

The invention will now be described in greater detail with reference to the example and the drawing, in which:

Fig. 1 is a cross-sectional view of an optical recording element according to the invention,

Fig. 2 shows graphically the reflection of a recording layer as a function of the layer thickness and

Fig. 3 shows a composition diagram.

In the composition diagram shown in Fig. 3 the layer constituents tellurium (Te), selenium (Se) and antimony (Sb) in at. percent are shown at the corners of the triangle. The recording layer used in the recording element in accordance with the invention comprises a Te-Se-Sb alloy the ratio of the elements of which lies within an area ABCDE bounded by a solid line and the corners of which in the given sequence have the composition:

A: $Te_{90}Se_8Sb_2$, B: $Te_{78}Se_{20}Sb_2$, C: $Te_{18}Se_{52}Sb_{30}$, D: $Te_{28}Se_2Sb_{70}$, E: $Te_{90}Se_2Sb_8$.

A preferred range as stated in the preamble line within the area ABFGE with the corners F and G being:

F: $Te_{39}Se_{21}Sb_{20}$ and G: $Te_{63}Se_2Sb_{35}$.

The compositions stated in the table are recorded in the diagram with a numeral indication corresponding to that in the table.

Reference numeral 11 in Fig. 1 denotes a transparent supporting plate. Said plate 11 may be of glass, quartz glass, or of a synthetic resin, for example, polycarbonate or polymethyl methacrylate. On one side the plate 11 comprises a transparent layer 12 of a light-cured lacquer in which a spiral-like follower (guiding) track 13 is provided.

The lacquer layer 12 is coated by a 100 nm thick recording layer 14. The recording layer 14 is provided by using a sputtering process. This may also be done by vapour deposition. After the layer has been provided the element is heated until the whole layer 14 has a polycrystalline structure. The recording layer 14 consists, for example, of $Te_{80}Se_{10}Sb_{10}$. A coating layer 16 of $SiO_2$ is provided on the recording layer 14 by sputtering.

When the recording element of Fig. 1 is used, the element, for example in the form of a disc having a diameter of 10 cm, is rotated at a frequency of 4 Herz. Via the transparent layer 12 and in the guide track 13, the recording element is exposed to pulsed laser light having an emission wavelength of 800 nm and a pulse time of 60 ns. The laser has a power of 8 mW on the recording layer. In the exposed places of the recording layer 14 an amorphous information spot 15 is formed with a diameter of 1 μm. The data recorded in this manner in the form of amorphous spots in a crystalline matrix are read in reflection by means fo a continuous laser light beam having an emission wavelength of 800 nm and a power of 0.4 mW on the plate. For reading, the recording is rotated at 4 Herz. The reading is based on the difference in reflection between an amorphous information spot and the polycrystalline surroundings.

This difference is illustrated in Fig. 2 in which the reflection coefficient (RC) from the substrate side (12) expressed in percentage of reflected light, of a layer having the composition $Te_{80}Se_{10}Sb_{10}$ is plotted graphically against the thickness (t) in nm of the layer. The wavelength of the light used is 800 nm. The broken line 21 in Fig. 2 relates to an amorphous layer. The dot-and-dash line 22 relates to a polycrystalline layer. The contrast between the amorphous layer and the crystalline layer is indicated by the line 23. It appears from Fig. 2 that the best contrast is obtained with a thickness between 80 and 100 nm.

## Claims

1. An erasable optical recording element having a supporting plate (11) and which comprises a recording layer (14) having a tellurium alloy, in which the recording layer is converted by exposure to modulated laser light in the exposed places from a more ordered or crystalline state into a less ordered or amorphous state and in which the locally changed state can be read by means of laser light, characterized in that the recording layer comprises a Te-Se-Sb alloy, the ratio of the elements Te, Se and Sb in at. percent lying within a range in the Te-Se-Sb composition diagram which is bounded by a polygon having the corners

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8$$

and furthermore that the layer thickness of the recording layer is between 80 and 300 nm.

2. An erasable optical recording element as claimed in Claim 1, characterized in that the ratio of the elements Te, Se and Sb in at. percent is within a range in the Te-Se-Sb diagram which is bounded by a polygon having the corners

$$Te_{90}Se_8Sb_2—Te_{78}Se_{20}Sb_2—Te_{39}Se_{21}Sb_{20}—Te_{63}Se_2Sb_{35}—Te_{90}Se_2Sb_8.$$

3. An erasable optical recording element as claimed in Claim 2, characterized in that the recording layer (14) has a composition $Te_{80}Se_{10}Sb_{10}$, $Te_{74}Se_{11}Sb_{15}$ or $Te_{50}Se_{30}Sb_{20}$.

4. An erasable optical recording elements as claimed in anyone of the preceding Claims, characterized in that the layer thickness of the recording layer (14) is from 80 to 150 nm.

5. An erasable optical recording element as claimed in any one of the preceding Claims, characterized in that the recording layer (14) is present on a supporting plate (11) which is transparent to laser light.

6. An erasable optical recording element as claimed in any one of the preceding Claims, characterized in that the recording layer (14) has a coating layer (16).

7. A method for optically recording information and for erasing the recorded information in which an optical recording element, which comprises a substrate (11) which is transparent to laser light and a crystalline recording layer (14) provided thereon in a thickness of 80—300 nm which comprises a Te-Se-Sb alloy the ratio of the elements Te, Se and Sb in at. percentage lying within a range in the Te-Se-Sb composition diagram which is bounded by a polygon having the corners

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8,$$

is rotated at a frequency of 1—30 Herz and is exposed from the substrate side to laser light pulsed in accordance with the information and having a pulse energy equal to or smaller than 1 nJ on the layer, as a result of which the crystalline recording layer melts in the exposed places and is then cooled, amorphous information areas being formed, and in which during erasing the amorphous areas are converted into the original crystalline structure by means of a thermal treatment.

8. A method as claimed in Claim 7, characterized in that the amorphous areas are heated by exposure to a laser light beam to a temperature between the glass transition temperature and the melting point of the recording layer, are kept at this temperature for some time until the amorphous part of the recording layer has crystallized, and are then cooled, the amorphous areas being converted in real time into the original crystalline structure.

9. A method as claimed in Claim 7, characterized in that the amorphous areas are converted into the crystalline structure by exposure to a laser light beam having a spot length of 1—100 µm, a spot width of 1.5—2.5 µm and an exposure time per amorphous area of 1—200 µs.

**Patentansprüche**

1. Löschbares optisches Aufzeichnungselement mit einer Trägerplatte (11) und einer Aufzeichnungsschicht (14) mit einer Tellurlegierung, wobei die Aufzeichnungsschicht durch Bestrahlung mit moduliertem Laserlicht an den belichteten Stellen aus einem mehr geordneten oder kristallinen Zustand in einen weniger geordneten oder amorphen Zustand umgewandelt wird und wobei der örtlich geänderte Zustand mit Laserlicht ausgelesen werden kann, dadurch gekennzeichnet, dass die Aufzeichnungsschicht eine Te-Se-Sb-Legierung aufweist, in der das Verhältnis der Elemente Te, Se und Sb in Atomprozenten innerhalb eines Bereiches in dem Te-Se-Sb-Zusammensetzungsdiagramm liegt, das durch ein Vieleck mit den Eckpunkten

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8$$

begrenzt wird und weiterhin, dass die Schichtdicke der Aufzeichnungsschicht zwischen 80 und 300 nm liegt.

2. Löschbares optisches Aufzeichnungselement nach Anspruch 1, dadurch gekennzeichnet, dass das Verhältnis der Elemente Te, Se und Sb in Atomprozenten innerhalb eines Bereiches in dem Te-Se-Sb-Zusammensetzungsdiagramm liegt, das durch ein Vieleck mit den Eckpunkten

$$Te_{90}Se_8Sb_2—Te_{78}Se_{20}Sb_2—Te_{39}Se_{21}Sb_{20}—Te_{63}Se_2Sb_{35}—Te_{90}Se_2Sb_8$$

begrenzt wird.

3. Löschbares optisches Aufzeichnungselement nach Anspruch 2, dadurch gekennzeichnet, dass die Aufzeichnungsschicht (14) eine Zusammensetzung $Te_{80}Se_{10}Sb_{10}$, $Te_{74}Se_{11}Sb_{15}$ oder $Te_{50}Se_{30}Sb_{20}$ aufweist.

4. Löschbares optisches Aufzeichnungselement nach einem der vorstehenden Ansprüche, dadurch gekennzeichnet, dass die Schichtdicke der Aufzeichnungsschicht (14) 80 bis 150 nm beträgt.

5. Löschbares optisches Aufzeichnungselement nach einem der vorstehenden Ansprüche, dadurch gekennzeichnet, dass die Aufzeichnungsschicht (14) auf einer für Laserlicht transparenten Trägerplatte (11) vorhanden ist.

6. Löschbares optisches Aufzeichnungselement nach einem der vorstehenden Ansprüche, dadurch gekennzeichnet, dass die Aufzeichnungsschicht (14) eine Deckschicht (16) aufweist.

7. Verfahren zum optischen Aufzeichnen von Information und zum Löschen der aufgezeichneten Information, wobei ein optisches Aufzeichnungselement mit einer für Laserlicht transparenten Trägerplatte (11) und einer kristallinen Aufzeichnungsschicht (14) mit einer Dicke von 80—300 nm aus einer Te-Se-Sb-Legierung versehen ist, wobei das Verhältnis der Elemente Te, Se und Sb in Atomprozenten

innerhalb eines Bereiches in dem Te-Se-Sb-Zusammensetzungsdiagramm liegt, das durch ein Vieleck mit den Eckpunkten

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8$$

begrenzt wird, mit einer Frequenz von 1—30 Hz in Drehung versetzt und von der Trägerseite her mit der Information entsprechendem pulsierendem Laserlicht bestrahlt wird, wobei die Impulsenergie auf der Schicht kleiner ist als 1 nJ oder diesem Wert entspricht, wodurch die kristalline Aufzeichnungsschicht an den belichteten Stellen schmilzt und danach abkühlt, wobei amorphe Informationsgebiete gebildet werden, und wobei während des Löschvorganges mittels einer Wärmebehandlung die amorphen Gebiete in die ursprüngliche Struktur umgewandelt werden.

8. Verfahren nach Anspruch 7, dadurch gekennzeichnet, dass die amorphen Gebiete durch Bestrahlung mit einem Laserlichtstrahl mit einer Temperatur zwischen der Glassprungtemperatur und dem Schmelzpunkt der Aufzeichnungsschicht erhitzt und eine gewisse Zeit auf dieser Temperatur gehalten werden, und zwar bis der amorphe Teil der Aufzeichnungsschicht kristallisiert ist, und dass die amorphen Gebiete danach abgekühlt und gleichzeitig in die ursprüngliche Struktur umgewandelt werden.

9. Verfahren nach Anspruch 7, dadurch gekennzeichnet, dass die amorphen Gebiete durch Bestrahlung mit einem Laserlichtstrahl mit einer Flecklänge von 1—100 µm, einer Fleckbreite von 0,5—2,5 µm und mit einer Belichtungszeit je amorphes Gebiet von 1—200 µs in die kristalline Struktur umgewandelt werden.

**Revendications**

1. Elément d'enregistrement optique effaçable présentant une plaque de support (11) qui est munie d'une couche d'enregistrement (14) contenant un alliage de tellure, dans lequel la couche d'enregistrement est convertie par exposition à de la lumière laser modulée aux endroits exposés à partir d'un état plus ordonné ou cristallin en un état moins ordonné ou amorphe et dans lequel l'état changé localement peut être lu à l'aide de lumière laser, caractérisé en ce que la couche d'enregistrement contient un alliage de Te-Se-Sb, le rapport en % en atomes des éléments Te, Se et Sb étant situé dans une gamme dans le diagramme de compositions Te-Se-Sb qui est limité par un polygone présentant les sommets

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8$$

et que l'épaisseur de couche de la couche d'enregistrement est comprise entre 80 et 300 nm.

2. Elément d'enregistrement optique effaçable selon la revendication 1, caractérisé en ce que le rapport entre les éléments Te, Se et Sb en % en atomes se situe dans une gamme dans le diagramme Te-Se-Sb qui est limité par un polygone présentant les sommets

$$Te_{90}Se_8Sb_2—Te_{78}Se_{20}Sb_2—Te_{39}Se_{41}Sb_{20}—Te_{63}Se_2Sb_{35}—Te_{90}Se_2Sb_8.$$

3. Elément d'enregistrement optique effaçable selon la revendication 2, caractérisé en ce que la couche d'enregistrement (14) présente une composition $Te_{80}Se_{10}Sb_{10}$, $Te_{74}Se_{11}Sb_{15}$ ou $Te_{50}Se_{30}Sb_{20}$.

4. Elément d'enregistrement optique effaçable selon l'une des revendications précédentes, caractérisé en ce que l'épaisseur de la couche d'enregistrement (14) est comprise entre 80 et 150 nm.

5. Elément d'enregistrement optique effaçable selon l'une des revendications précédentes, caractérisé en ce que la couche d'enregistrement (14) est présente sur une plaque de support (11) qui est transparente à la lumière laser.

6. Elément d'enregistrement optique effaçable selon l'une des revendications précédentes, caractérisé en ce que la couche d'enregistrement (14) présente une couche de revêtement (16).

7. Procédé pour l'enregistrement optique d'information et pour l'effacement de l'information enregistrée, selon lequel un élément d'enregistrement optique, qui comporte un substrat (11) qui est transparent à la lumière laser et sur lequel est appliquée une couche d'enregistrement cristalline (14) d'une épaisseur de 80 à 300 nm, contenant un alliage de Te-Se-Sb, le rapport des éléments Te, Se et Sb en % en atomes étant situé dans une gamme dans le diagramme de compositions Te-Se-Sb qui est limité par un polygone présentant les sommets

$$Te_{90}Se_8Sb_2—Te_{78}Se_{20}Sb_2—Te_{18}Se_{52}Sb_{30}—Te_{28}Se_2Sb_{70}—Te_{90}Se_2Sb_8,$$

et porté à rotation à une fréquence de 1 à 30 Hz et est exposé du côté du substrat à de la lumière laser pulsée conformément à l'invention à une énergie d'impulsion égale ou inférieure à 1 nJ sur la couche, de sorte que la couche d'enregistrement cristalline fonde aux endroits exposés et se refroidisse ensuite, le tout de façon qu'il se forme des régions d'information amorphes, alors que lors de l'effacement, les régions amorphes sont converties en la structure cristalline originelle à l'aide d'un traitement thermique.

8. Procédé selon la revendication 7, caractérisé en ce que les régions amorphes sont chauffées à une température située entre la température de transition du verre et le point de fusion de la couche d'enregistrement par exposition à un faisceau de lumière laser, maintenues à cette température pendant

quelque temps jusqu'à la cristallisation de la partie amorphe du matériau d'enregistrement et ensuite refroidies de façon que la région amorphe soit convertie en temps réel en la structure cristalline originelle.

9. Procédé selon la revendication 7, caractérisé en ce que les régions d'information amorphes sont converties en la structure cristalline originelle par exposition à un faisceau de lumière laser présentant une longueur de tache de 1 à 100 µm, une largeur de tache de 1,5 à 2,5 µm et une durée d'exposition par région amorphe de 1 à 200 µs.

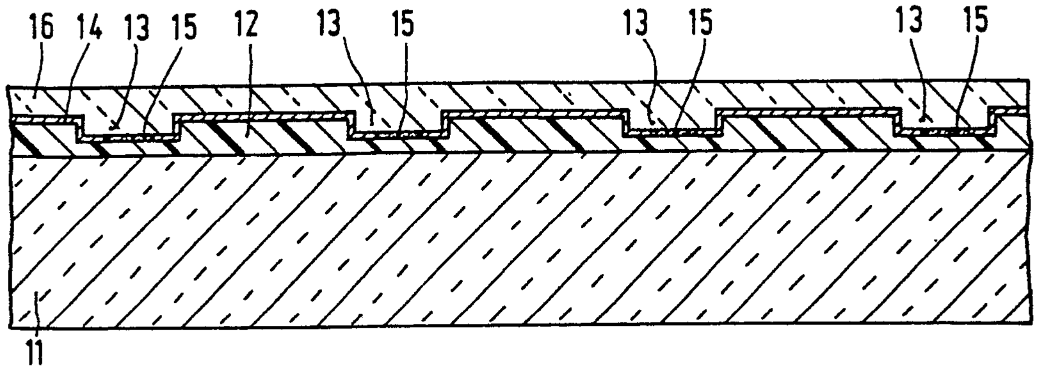
16
14
13
15
12
13
15
13
15
13
15
11

FIG.1

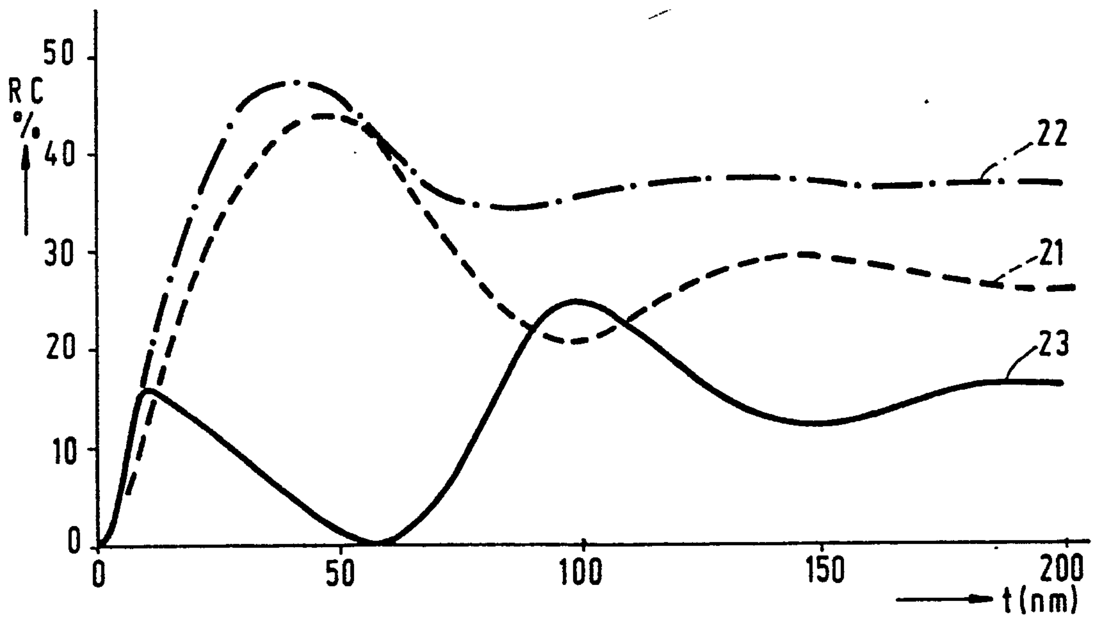
50
RC
%
40
30
20
10
0
0
50
100
150
200
t(nm)
22
21
23

FIG.2

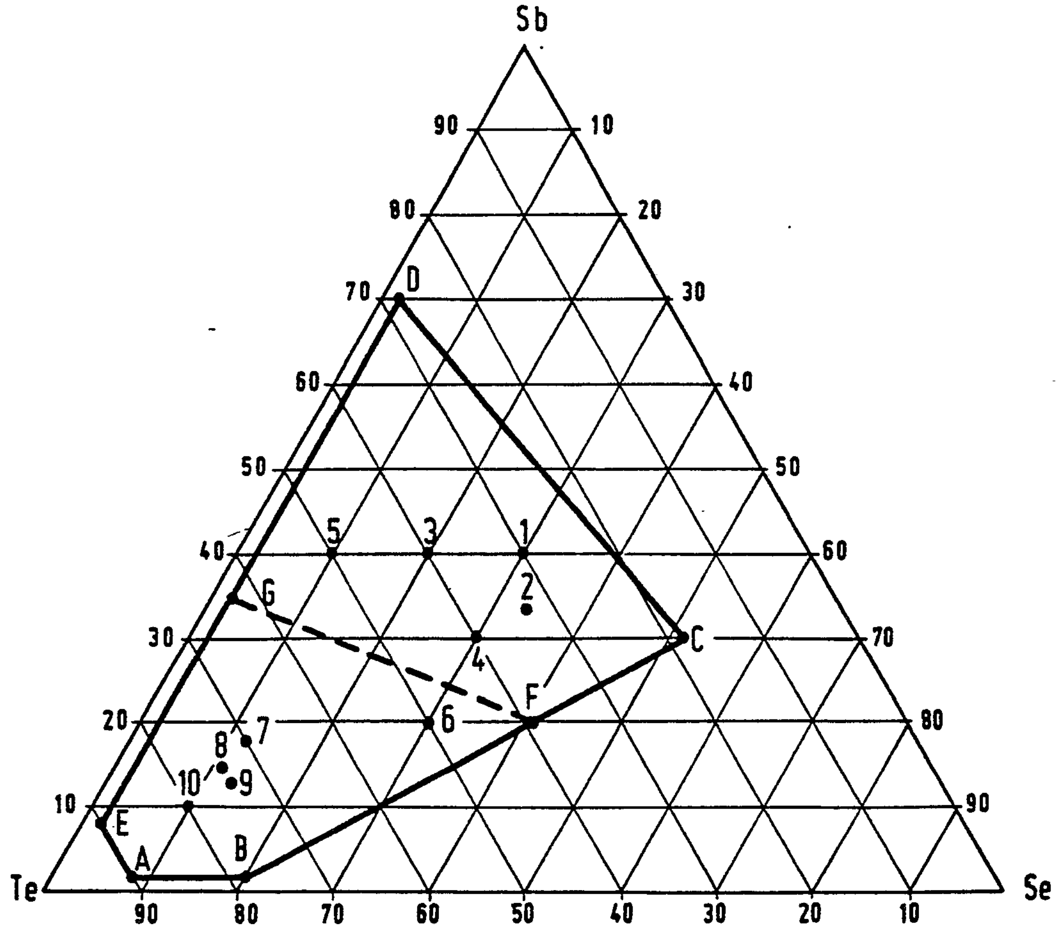
Sb
90
10
80
20
70
D
30
60
40
50
50
5
3
1
40
60
G
2
30
C
70
4
F
20
7
6
80
8
10
9
10
90
E
A
B
Te
Se
90
80
70
60
50
40
30
20
10

FIG. 3